## Europäisches Patentamt

## European Patent Office

## Office européen des brevets

(11) Publication number: **0 142 723**
**B1**

# EUROPEAN PATENT SPECIFICATION

(45) Date of publication of patent specification: **13.06.90**

(51) Int. Cl.⁵: **H 04 J 3/07**

(21) Application number: **84112651.9**

(22) Date of filing: **19.10.84**

(54) **Frequency converter for multiplex system using pulse-stuffing.**

(30) Priority: **19.10.83 JP 195593/83**

(43) Date of publication of application:
**29.05.85 Bulletin 85/22**

(45) Publication of the grant of the patent:
**13.06.90 Bulletin 90/24**

(84) Designated Contracting States:
**DE FR GB IT**

(56) References cited:
**ELECTRONICS AND COMMUNICATIONS IN JAPAN, vol. 52-A, no. 6, June 1969, pages 13-22, Washington, US; N. KUROYANAGI et al.: "On multiplexing systems for PCM hierarchical networks"**

**JAPAN TELECOMMUNICATIONS REVIEW, no. 3, 1969, pages 143-155; T. SAKASHITA et al.: "A 120-channel PCM system on symmetrical pairs"**

(73) Proprietor: **FUJITSU LIMITED**
**1015, Kamikodanaka Nakahara-ku**
**Kawasaki-shi Kanagawa 211 (JP)**

(72) Inventor: **Fukushima, Takeo**
**1404, Shinsaku Takatsu-ku**
**Kawasaki-shi Kanagawa 213 (JP)**
Inventor: **Mizuguchi, Masami**
**8-15-106, Susukino 2-chome Midori-ku**
**Yokohama-shi Kanagawa 227 (JP)**
Inventor: **Furukawa, Takahiro**
**4-19-12, Shimomaruko Ota-ku**
**Tokyo, 146 (JP)**
Inventor: **Yato, Yoshiaki**
**4-16-23, Osawa**
**Mitaka-shi Tokyo 181 (JP)**
Inventor: **Sato, Kenji**
**11-3, Edanishi 1-chome Midori-ku**
**Yokohama-shi Kanagawa 227 (JP)**
Inventor: **Fujimoto, Naonobu**
**1660-1, Kamikodanaka Nakahara-ku**
**Kawasaki-shi Kanagawa 211 (JP)**
Inventor: **Murase, Tetsuro**
**95-1-303, Kashiwaba Naka-ku**
**Yokohama-shi Kanagawa 231 (JP)**

(56) References cited:
**IEEE 1974 PROCEEDINGS OF THE INTERNATIONAL CONFERENCE ON COMMUNICATIONS, Minneapolis, 17th-19th June 1974, pages 8E-1 - 8E-5; W.R. READER: "Digital multiplex equipment for the LD-4 system"**

(74) Representative: **Lehn, Werner, Dipl.-Ing. et al Hoffmann, Eitle & Partner Patentanwälte Arabellastrasse 4 D-8000 München 81 (DE)**

**Description**

The present invention relates to a frequency converter which converts frequency of stuffing pulse applied.

In a known method of converting frequency, an input signal is once stored in a memory and such signal is read from said memory with a clock which is higher than the write clock. In this case, the write clock and read clock are respectively different in repetition frequency and therefore the phase difference between write clock and read clock becomes small gradually and the same input signal is sometimes read twice.

In order to prevent this phenomenon, when the phase difference becomes smaller than a constant value, the read operation is inhibited and a stuffing pulse is inserted. Since this stuffing pulse in invalid as data, it must be eliminated at the receiving side. Accordingly, a stuffing designation pulse which shows the presence or absence of a stuffing pulse is also inserted together and these signals are transmitted simultaneously.

As described in the published Japanese Patent Application No. 56—126343, for example, the stuffing designation pulse has a 3-bit structure to allow for transmission error, and the presence of a stuffing pulse was determined on the basis of majority decision at the receiving side.

This system results in no problem when the repetition frequency of the read clock is sufficiently higher than the write clock, but if the difference between the repetition frequencies of the read clock and the write clock is small, the stuffing designation pulse cannot be transmitted because there is no margin for inserting the stuffing designation pulse of 3-bits.

It is an object of the present invention to provide a frequency converter which can transmit a stuffing designation pulse even where the frequency difference between an input signal and an output signal is small.

According to the present invention, the above object can be attained by providing:

a frequency converter which is capable of converting frequenby by inserting a stuffing pulse into a multiplex signal, characterised by comprising a means for inserting said stuffing pulse and a means for indicating presence or absence of said stuffing pulse and for inserting a frame synchronization signal for frame synchronization.

Preferably, the presence or absence of said stuffing pulse is indicated by logic "1" and "0" forming said frame synchronization signal.

According to the present invention, the presence or absence of a stuffing pulse can be indicated by the stuffing designation pulse of 1 bit and therefore the stuffing designation pulse can be transmitted ever where the difference between repetition frequencies of write and read clocks is small.

Moreover, in this case, since the destuffing cotrol is carried out only when frame synchronization is obtained at the receiving side, the stuffing designation pulse is formed by one bit but it does not influence transmission error.

For a better understanding of the invention, and to show how the same may be carried into effect, reference will now be made, by way of example, to the accompanying drawings, in which:

Figure 1 shows an example of frame format to which the present invention may be applied, including a main frame format (a), and subframe formats (b) and (c);

Figure 2 (a) is an example of frequency converter of the present invention;

Figure 2 (b) shows the receiving side;

Figure 3 shows embodiments of stuffing controller, frequency divider, frame signal generator and pulse inserter;

Figure 4 is a time chart for Figure 3; and

Figure 5 shows embodiments of a destuffing controller and a frequency divider on the receiving side.

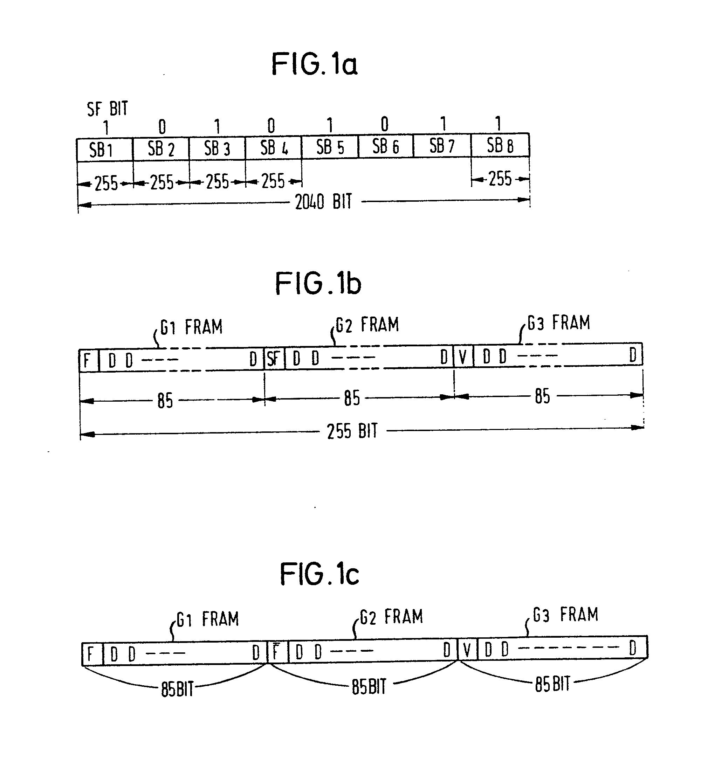

Preferred embodiments of the present invention will be described hereafter with reference to the drawings. Figure 1 shows an example of the frame format where a PCM multiplex signal with clock frequency of 704 kb/s is synchronously converted to a PCM (pulse code modulation) multiplex signal with clock frequency of 710.618 kb/s. As shown in Figure 1(a), the main frame is composed of eight subframes and each subframe is composed, as shown in Figure 1(b), of three G frames, namely, G1, G2 and G3 frames. The Gl frame consists of a subframe synchronization pulse F and data pulses D of 84 bits, the G2 frame consists of an SF pulse which is used in common as the main frame synchronization pulse of 1 bit and a stuffing designation pulse, and of D pulses of 84 bits, G3 frame consists of the stuffing pulse V of 1 bit and D pulses of 84 bits. One subframe is composed of 255 bits. The code train 10101011 is assigned bit by bit to the SF pulse of the G2 frame and such code train is repeated for every eight subframes. Thus, it is repeated with the period of the main frame. Here, the code "0" indicates that the stuffing pulse exists (is present), while the code "1" indicates that the stuffing pulse does not exist (is absent).

The subframe of Figure 1(c) is also composed of three G frames. In this case, however, the subframe synchronization pulse F of the first G1 frame is sent through repetition of the code train 10101011, the main frame synchronization pulse $\overline{F}$ of the second G2 frame is sent through repetition of the inverted code train 01010100, and the frame synchronization pulse of the third G3 frame is also located at the position of the stuffing pulse V. In this case, presence or absence of the stuffing pulse can be determined by the code of frame synchronization pulse $\overline{F}$.

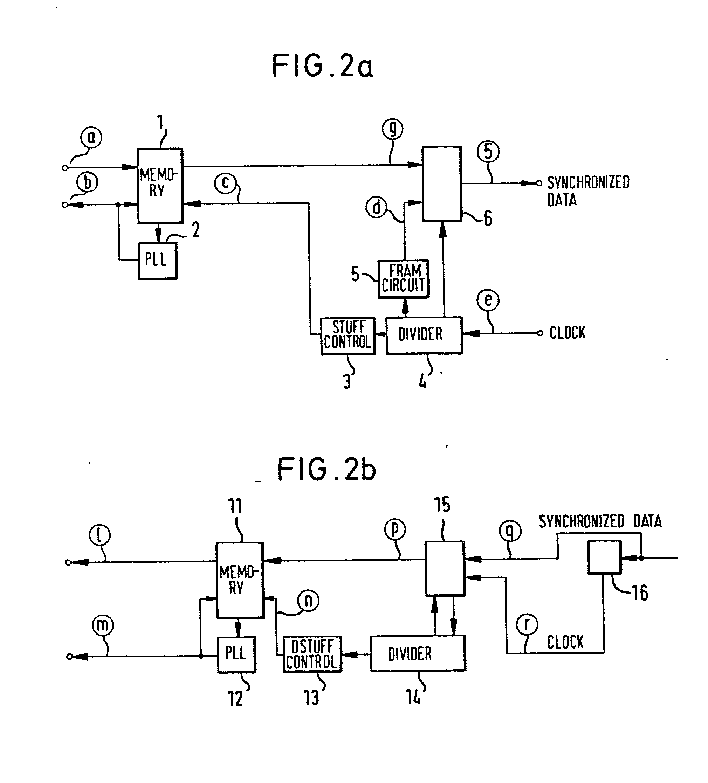

The preferred embodiment of the present invention is described with reference to Figure 2.

Figure 2 shows buffer memories 1, 11, phase locked loop (PLL) circuits 2, 12, a stuffing control circuit 3, frequency dividers 4, 14, a frame signal generator 5, a pulse inserter 6, a destuffing control circuit 13, a synchronization circuit 15, and a clock extraction circuit 16.

In Figure 2 (a), the data (a) of a low order group signal are written into the buffer memory 1 in synchronization with the clock b at the bit rate of 704kb/s sent from the PLL 2. This clock b is generated as indicated below from the high order group signal clock e. The clock (e) is divided by the divider 4 to the basic frequency required for forming the frame and is then subjected to the stuffing control (extraction of clock) in the stuffing control circuit 3 so that a constant stuffing rate can be obtained (3/8 in the example of Figure 1). As a result of stuffing, the output pulse train (c) of stuffing control circuit 3 receives the extracted pulse of 704 kb/s at such a timing of the leading bit position of the G3 frame when the main frame synchronization pulse SF is "0" and the read operation of data from the buffer memory 1 is inhibited. Moreover, the phase of the output pulse train (c) is synchronized by the PLL circuit 2 and such pulse is produced as the low order group signal clock (b). Simultaneously, the output of frequency divider 4 is used to drive a frame signal generator 5 in order to generate the required frame signal and to form a frame as shown in Figure 1 at the pulse inserter 6.

The phase comparator of PLL 2 compares the phase of an output of the voltage controlled oscillator and the phase of read clock (c) and therefore it is enough for the buffer memory 1 to have the capacitance for absorbing only fluctuations of phase due to the frame bit, stuffing bit and stuffing designation pulse insertion.

With the aforementioned structure, the data signal written in the buffer memory 1 is read by the clock (c) and is then sent to the pulse inserter 6 as the data (g). In the pulse inserter 6, the frame signal is inserted into the data as described above and the frame as shown in Figure 1 is formed and is supplied to the transmission line as the synchronized data output (f).

The timing where the main frame synchronization pulse SF becomes "0" matches the timing where read operation of buffer memory 1 is inhibited. When the read operation is inhibited, the data (g) to be input to the pulse inserter 6 is logic "0" and it becomes the stuffing pulse.

The synchronized data output (f) sent to the transmission line is sent to the clock extraction circuit 16 in the receiving side shown in Figure 2 (b) and the synchronized clock (r) is extracted. The subframe synchronization pulse F and the main frame synchronization signal SF are removed from the synchronized data (q) in the synchronizer 15 and only the signal (p) of data is written into the buffer memory 11. Meanwhile, the synchronized clock input (r) is divided by the divider 14 and sub and main frame synchronization signal extraction timing is supplied to the synchronizer 15, while the timing signal for writing data to the buffer memory 11 is supplied simultaneously to the destuffing controller 13. In the present invention, the data which indicates presence or absence of stuffing pulses in the sending side is contained in the code train of the main frame synchronization signal SF and it is also used as the stuffing designation pulse. In the destuffing controller 13, the data corresponding to the stuffing designation pulse can be obtained from the code train of multiframe synchronization signal SF. Thus, the data for determining presence or absence of stuffing pulse V can be obtained. The multiframe synchronization signal SF indicates that the stuffing pulse does not exist when it is "1". Therefore, the pulse in this case is judged as valid. On the other hand, it indicates that the stuffing pulse exists when it is "0". In this case, the pulse is judged as invalid. In accordance with such judgement, the destuffing controller 13 supplies the clock (n) to the buffer memory so that the valid pulse is written to the buffer memory 11 but writing of invalid pulse is inhibited. Such clock pulses are extracted and the phases of them are averaged by the PLL circuit 12 and the original low order group signal clock (m) can be recovered as the output thereof. The data of buffer memory 11 is read by such recovered clock (m) and thereby the low order group data output (I) can be obtained.

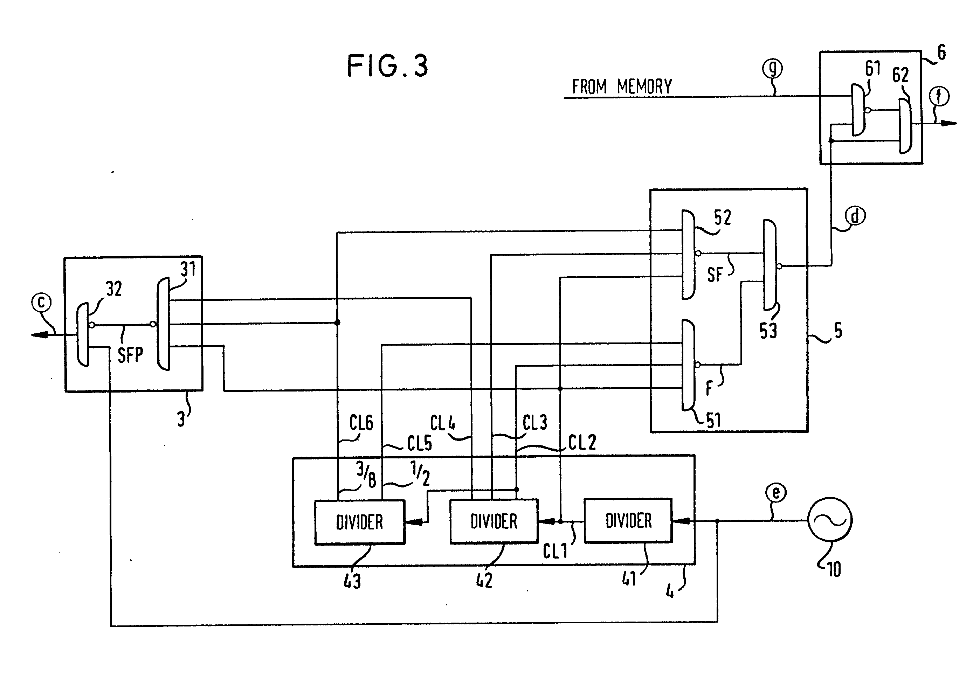

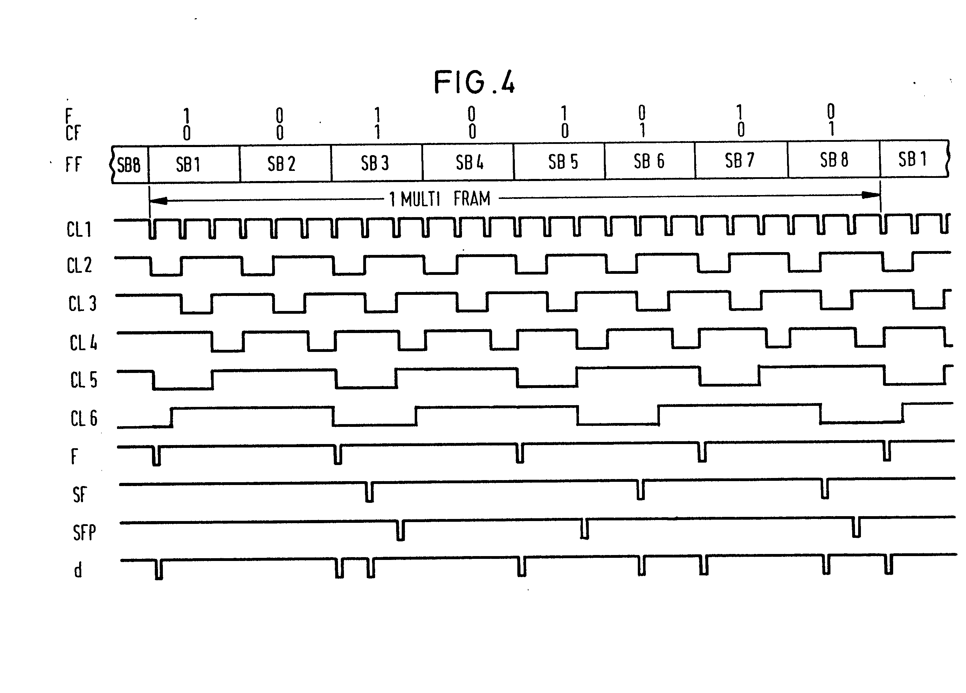

The stuffing controller, frequency divider, frame signal generator and pulse inserter are described in more detail with reference to Figure 3 and Figure 4.

The same Figures show a clock (e) generator 10; NAND gates 31, 51, 52, 53, 61; frequency dividers 41, 42, 43; an AND gate 32 with inhibit input; and an AND gate 62. The signal waveforms of respective portions in Figure 3 are indicated by the same symbols in Figure 4. In Figure 4, F is the code train of the subframe synchronization signal, while SF is the code train of the multiframe synchronization signal and FF is the frame format.

Operations are then described below. The clock (e) generated by the generator 10 is supplied to a divider 4 and is then divided to 1/85 by the divider 41 and is then output as the clock CL1, because one G frame is composed of 85 bits. The clock CL1 indicates the frame signal position of each G frame. The clock CL1 is further divided into 1/3 by the divider 42 and is then output as the clocks CL2, CL3, CL4 having different phases.

The falling part of clock CL2 indicates the heading part of G1 frame, while that of CL3 the heading part of G2 frame and that of CL4 the heading part of G3 frame respectively.

The clock CL2 is supplied to the divider 43 and the clock CL5 divided to 1/2 and the clock CL6 divided to 3/8 are produced therefrom.

Here, the clocks CL1, CL2, CL5 are supplied to the NAND gate 51 and the subframe synchronization signal F is produced therefrom.

In addition, the clocks CL1, CL3, CL6 are supplied to the NAND gate 52 and the main frame synchronization signal (namely, the stuffing designation pulse) SF is output. The clocks CL1, CL4, CL6 are input to the NAND gate 31 and the stuffing control pulse SFP which conducts extraction of clock (e) three times for each multiframe can be produced.

An output of NAND gate 31 is supplied to the inverting input terminal of AND gate 32. The clock (e) is supplied to the other input of the AND gate 32 and the clock (c) which is extracted by the stuffing control pulse SFP as described above is output.

On the other hand, the subframe synchronization signal F and main frame synchronization signal are supplied to the NAND gate 53 and also to the NAND gate 61 and AND gate 62 of the pulse inserter 6 as the synchronization signal (d).

An input signal read from the buffer memory 1 is supplied to the other input of NAND gate 61 but it is inhibited to produce the signal in accordance with the pattern of synchronization signal by the subframe synchronization signal F and the main frame synchronization signal SF. At this time, since an output of the NAND gate 61 becomes logic "1", the subframe synchronization signal F and the main frame synchronization signal SF are supplied from the AND gate 62.

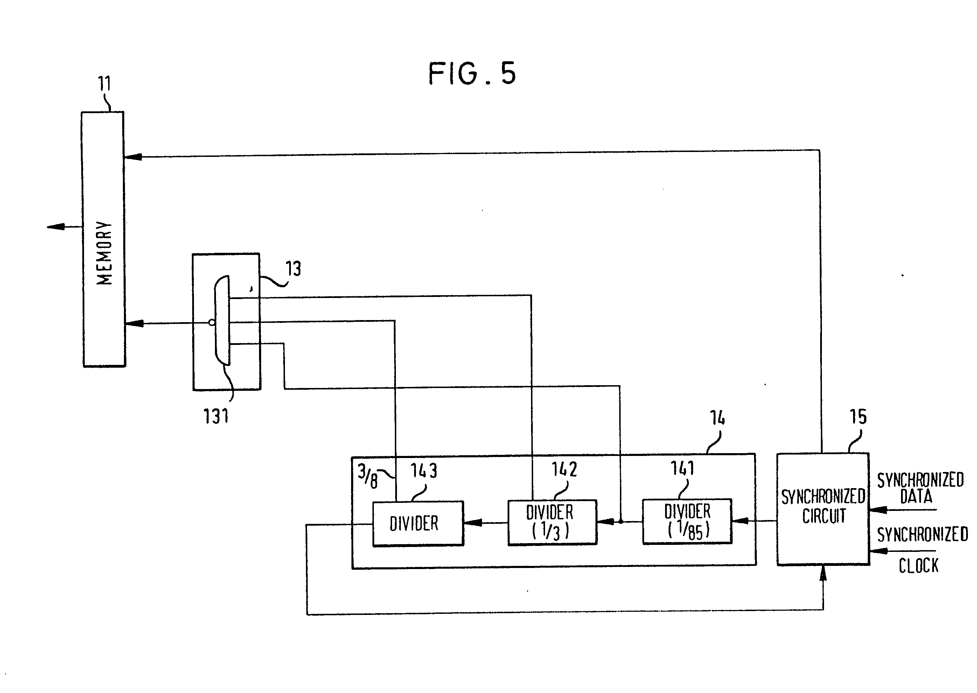

Next, the practical examples of divider 14 and destuffing control circuit 15 in the receiving side are described with reference to Figure 5.

In Figure 5, 141, 142, 143 are dividers, and 131 is a NAND gate. The clock (r) extracted by the clock extraction circuit 16 and the synchronized data (q) received are supplied to the synchronization circuit 15.

In this circuit, the subframe synchronization signal F and main frame synchronization signal SF are removed from the synchronized data but an output of divider 14 is fed back to the synchronization circuit 15 in order to lock the phases of the output of divider 14 and the synchronized data (q).

Here, the frequency dividing circuits 141, 142, 143 forming the divider 14 respectively have the same functions as the frequency dividing circuits 41 42, 43.

As described regarding Figure 3, an output of the dividing circuit 141, an output of the dividing circuit 142 corresponding to the clock CL4 of the dividing circuit 42 and an output of the dividing circuit 143 corresponding to the clock CL6 of dividing circuit 43 are supplied to the NAND gate 131 which forms the destuffing control circuit 13, in order to know the destuffing timing.

Thereby, the pulse indicated as SFP in Figure 4 is supplied to the buffer memory 11 from the NAND gate 131. The buffer memory 11 inhibits writing of synchronized data when the pulse SFP is generated.

As described above, according to the present invention, the multiframe synchronization signal is used also as the stuffing designation pulse. Therefore, the stuffing designation pulse can be transmitted even when the conversion ratio is small.

**Claim**

A frequency converter which converts frequency by inserting stuffing pulses into multiplex signals including means (1, 3) for inserting said stuffing pulses; and means (6) for indicating presence or absence of said stuffing pulse and inserting the frame synchronization signal for frame synchronization, whereby the presence or absence of said stuffing pulse is indicated by a stuffing designation pulse, characterized in that said stuffing designation pulse consists of one bit, and is either logic "1" or "0" forming said frame synchronization signal.

**Patentanspruch**

Frequenzwandler, der Frequenz durch Einfügen von Stopfimpulsen in Multiplexsignale umwandelt, mit Mitteln (1, 3) zum Einfügen der Stopfimpulse; und Mitteln (6) zum Andeuten des Vorhandenseins oder Nichtvorhandenseins des Stopfimpulses und zum Einfügen des Rahmensynchronisationssignals für Rahmensynchronisation, wodurch das Vorhandensein oder Nichtvorhandensein des Stopfimpulses durch einen stopfkennzeichnenden Impuls angedeutet wird, dadurch gekennzeichnet, daß der stopfkennzeichnende Impuls aus einem Bit besteht, entweder Logik "1" oder "0" ist, und das Rahmensynchronisationssignal bildet.

**Revendication**

1. Convertisseur de fréquence destiné à convertir la fréquence par l'insertion d'impulsions de remplissage dans des signaux multiplex, comportant un dispositif (1, 3) destiné à insérer lesdites impulsions de remplissage; et un dispositif (6) destiné à indiquer la présence ou l'absence de ladite impulsion de remplissage et à insérer le signal de synchronisation de trame pour synchroniser la trame de manière que la présence ou l'absence de ladite impulsion de remplissage soit indiquée par une impulsion de désignation de remplissage, caractérisé en ce que ladite impulsion de désignation de remplissage consiste en un bit qui se trouve soit au niveau logique "1" soit au niveau logique "0", formant ledit signal de synchronisation de trame.

## FIG.1a

SF BIT

| SB1 | SB 2 | SB 3 | SB 4 | SB 5 | SB 6 | SB 7 | SB 8 |

1  0  1  0  1  0  1  1

←255→←255→←255→←255→                                    ←255→

←——————————— 2040 BIT ———————————→

## FIG.1b

G1 FRAM                     G2 FRAM                     G3 FRAM

| F | D D  — — —           D | SF | D D  — — —       D | V | D D  — — —           D |

←——— 85 ———→  ←——— 85 ———→  ←——— 85 ———→

←—————————— 255 BIT ——————————→

## FIG.1c

G1 FRAM                     G2 FRAM                     G3 FRAM

| F | D D — — —        D | F | D D — — —        D | V | D D — — — — — — —        D |

85BIT                    85BIT                    85BIT

# FIG.2a

# FIG.2b

# FIG.3

EP 0 142 723 B1

FIG.4

FIG.5

EP 0 142 723 B1